(19)

**Europäisches Patentamt**
**European Patent Office**
**Office européen des brevets**

(11) **EP 3 133 540 A1**

(12) **EUROPEAN PATENT APPLICATION**

(43) Date of publication:
**22.02.2017 Bulletin 2017/08**

(51) Int Cl.:
**G06Q 10/06** *(2012.01)* **G06Q 30/02** *(2012.01)*
**G06Q 50/14** *(2012.01)*

(21) Application number: **16168635.7**

(22) Date of filing: **06.05.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **19.08.2015 US 201514830078**

(71) Applicant: **Khalidi, Fares**
**Boca Raton, Florida 33433 (US)**

(72) Inventor: **Khalidi, Fares**
**Boca Raton, Florida 33433 (US)**

(74) Representative: **Romano, Giuseppe et al**
**Società Italiana Brevetti S.p.A**
**Piazza di Pietra, 39**
**00186 Roma (IT)**

(54) **METHOD AND SYSTEM FOR DETERMINING THE LOWEST COST MEETING DESTINATION FOR A GROUP OF TRAVELERS**

(57) A computer-implemented method and system for determining the lowest cost meeting destination for a group of travelers is provided, including receiving points of origin, a number of travelers from each point of origin, and a requested travel date from a user, determining a lowest cost for each combination of a point of origin and a destination, calculating a total cost for each destination based on the determined lowest cost and the number of travelers from each point of origin, and displaying on a display a list of destinations ranked by the calculated total cost. Further, an alternative method of travel may be selected or suggested based on user input parameters.

**EP 3 133 540 A1**

**Description**

**Cross-Reference to Related Application**

This application claims the benefit of co-pending United States Provisional Patent Application Serial No. 62/039,289, filed August 19, 2014, which is incorporated herein in its entirety.

**Field of the Invention**

The present invention relates generally to travel information, planning or management systems, and more particularly, to a method and system for determining the lowest cost meeting or gathering destination for a group of travelers.

**Background of the Invention**

Traditionally, travelers rely on their travel agents to make travel plans and find travel deals. However, with the widespread use of the Internet technology, the online travel industry has taken hold as it provides travelers the convenience to plan their trips by themselves anytime and anywhere without having to pay fees to the travel agents.

Currently, there are numerous online booking websites where a user can search for the lowest cost of flight, hotel, car, or any combination thereof between a point of origin and a destination. In order to carry out a basic search, the user will normally be asked to enter an origin, destination and, optionally, travel dates, number of stops and number of travelers wishing to travel from the entered origin to the entered destination. The website search engines perform a search based on the inserted information, and deliver the results to the user in a variety of formats and sorted by adjustable criteria.

In the event that a user wishes to search and compare the cost of traveling between different points of origin and/or different destination points, such as when planning for several people to meet at a specific destination, the currently existing technology forces a user to go to an online booking website and manually enter data multiple times and keep track of the costs to sum up for every origin and/or destination that he or she wants to check. In addition to being time consuming, the disadvantage of the existing technology is that it is not nimble enough to keep up with changes associated with the travel to the destinations. This is especially true with flights as promotions and flight costs change more quickly than ever with the advent of low cost carriers. Since with the existing technology a user cannot obtain all the information required for determining the lowest cost meeting destination quickly, the costs may have already changed by the time they are manually assembled by the user.

American Express and other travel companies rely on their extensive years of history to help their customers determine the best locations using "rule of thumb" which generally points to large travel hubs as lower cost destinations. This method is subjective and is not based on real time data. In addition, a user has to pay a premium to obtain this kind of service which defeats the purpose of reducing overall cost.

Accordingly, there remains a need in the art for a powerful yet simple to use search engine that facilitates searching and comparing travel options between different points of origin and/or different destination points, and that is particularly useful for planning a joint package for several persons to meet at a specific destination. Such method and system would increase the transparency associated with the decision making process of where to hold a meeting or gathering allowing for informed data driven decisions that can help reduce overall travel expenses.

**Summary of the Invention**

The present invention is directed to a method and system for determining the lowest cost meeting or gathering destination for a group of travelers so that a user can easily and quickly make an informed decision as to which destination should be chosen as the meeting destination for the group of travelers so as to reduce overall travel expenses. The method includes the step of receiving points of origin, a number of travelers from each point of origin, and a requested travel date from a user. The method further includes the steps of determining a lowest cost for each combination of a point of origin and a destination and calculating total cost for each destination based on the determined lowest cost and the number of travelers coming from each point of origin. The method additionally includes the step of displaying on a display a list of destinations ranked by the calculated total cost. The user can, therefore, make an informed decision as to which destination to choose based on the total cost.

Potential destinations can be determined by the system or entered by the user. The number of destinations can be limited to accommodate available bandwidth and reduce processing time and cost.

Costing of flights can be done through a "lowest available" search. However, other mathematical options including average of the lowest 10 seats available, weighted average of available flights, etc. can also be used so as to determine the best scenarios for customers.

The travel date can include a departure date, a return date, or both. If the travel date is flexible, the system can also determine the lowest cost among any available travel dates so that the user can choose a destination and a date for the meeting that would reduce the overall travel expenses.

An object of the present invention is to provide a method and system that determines the lowest cost meeting or gathering destination for a group of travelers so that the user can make an informed decision as to which destination should be chosen as the meeting destination.

Another object of the present invention is to provide a method and system that determines the lowest cost meeting or gathering destination for a group of travelers, and that is easy to use and provides all the information needed by the user in one place so that the user does not have to manually enter data multiple times and keep track of the costs to sum up for every destination that he or she wants to check.

A further object of the present invention is to provide a method and system that determines the lowest cost meeting or gathering destination for a group of travelers, and that is efficient and keeps up with the rapid changes of the data so that the user can get the best deal in real time.

Disclosed is a method for determining a lowest cost meeting destination for a group of travelers, the method comprising the steps of receiving points of origin, a number of travelers from each point of origin, and a requested travel date, determining a lowest cost for each combination of a point of origin and a destination, calculating a total cost for each destination based on the determined lowest cost and the number of travelers from each point of origin, and displaying on a display a list of destinations ranked by the calculated total cost. The method further comprises receiving alternative travel mode parameters that indicate travel modes other than air travel and determining an alternative mode of travel based comparing the alternative travel mode parameters and the total cost.

In another aspect, calculating the total cost includes multiplying the number of travelers with the determined lowest cost.

In another aspect, displaying on a display a list of destinations ranked by the calculated total cost includes displaying flight information.

In another aspect, receiving points of origin, a number of travelers from each point of origin, and a requested travel date includes receiving a city name or an airport code.

In another aspect, the destination is selectable by a user.

In another aspect, the method is carried out by a system configured to suggest a travel date.

In another aspect, the method is carried out by a system to prompt a user to purchase travel tickets based on the displayed list of destinations.

These and other objects, features, and advantages of the present invention will become more readily apparent from the attached drawings and the detailed description of the preferred embodiments, which follow.

## Brief Description of the Drawings

The preferred embodiments of the invention will hereinafter be described in conjunction with the appended drawings provided to illustrate and not to limit the invention, where like designations denote like elements, and in which:

FIG. 1 presents different computing environments in which a method for determining the lowest cost meeting or gathering destination for a group of travelers according to the present invention can be implemented;

FIG. 2 presents a flow chart illustrating an overall process for determining the lowest cost meeting or gathering destination for a group of travelers according to the present invention;

FIG. 3 presents a flow chart illustrating the subroutine of step 240 in FIG. 2; and

FIG. 4 presents a flow chart illustrating the subroutine of step 250 in FIG. 2.

Like reference numerals refer to like parts throughout the several views of the drawings.

## Detailed Description

The following detailed description is merely exemplary in nature and is not intended to limit the described embodiments or the application and uses of the described embodiments. As used herein, the word "exemplary" or "illustrative" means "serving as an example, instance, or illustration." Any implementation described herein as "exemplary" or "illustrative" is not necessarily to be construed as preferred or advantageous over other implementations. All of the implementations described below are exemplary implementations provided to enable persons skilled in the art to make or use the embodiments of the disclosure and are not intended to limit the scope of the disclosure, which is defined by the claims.

Shown throughout the figures, the present invention is directed toward a method and system for determining the lowest cost meeting or gathering destination for a group of travelers that provides a list of destinations ranked by the total cost of each destination so that a user can easily and quickly make an informed decision in choosing a meeting destination.

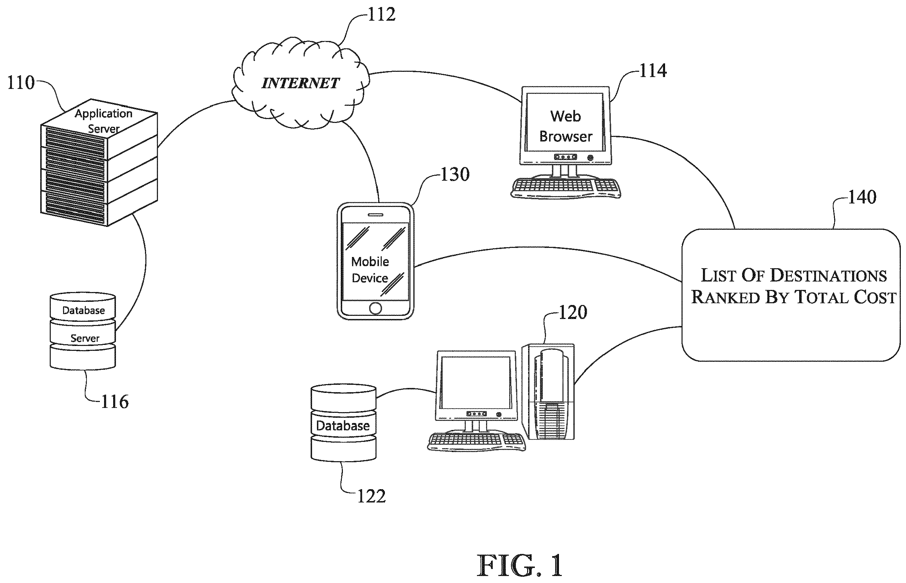

Referring now to FIG. 1, different computing environments are illustrated, in which a process for determining the lowest cost meeting or gathering destination for a group of travelers according to the present invention can be implemented. As shown, the process according to the present invention can be implemented as a Web application that can be accessed using a Web browser 114 connected to an application server 110 via the Internet 112. Alternatively, the process according to the present invention can also be implemented as a software program installed in a personal computer (PC) 120 having a processor and an operating system. In addition, the process according to the present invention can be implemented as an app on a mobile device 130. Depending on the computing environment being used, a Graphical User Interface (GUI) 140 can be displayed on the screen of the Web browser 114, the monitor of the PC 120, or the screen of the mobile device 130 as a result of activating the Web application, the software program or the mobile app implementing the process for determining the lowest cost meeting or gathering destination for a group of travelers according to the present invention.

The travel data utilized by the process of the present invention can be stored in a separate database server 116 accessible by the application server 110. Alternatively, the database server 116 can be integrated with the application server 110. The travel data utilized by the process of the present invention can also be stored in a database 122 accessible by the PC 120. The database 122 can be located on either an internal hard drive or an external hard drive of the PC. Further, the mobile device 130 can also access the data server 116 through the Internet 112 via mobile network technology.

Various database technologies can be used to facilitate accessing and processing of the travel data utilized by the process of the present invention. The database can be implemented as a single integrated database containing all the information in one location or as a distributed database management system including a set of multiple logically interrelated databases distributed over a network.

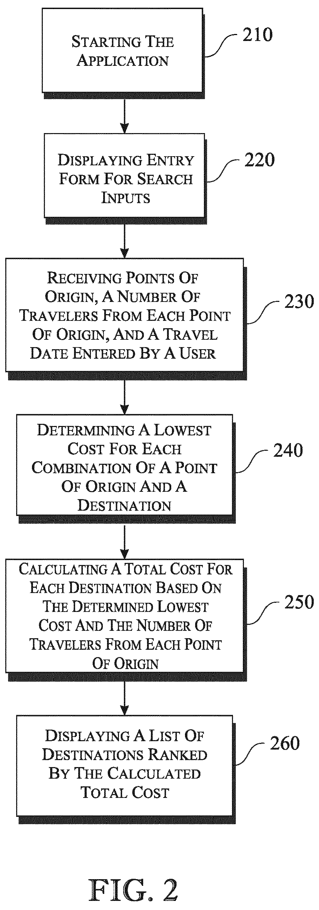

Turning now to FIG. 2, a flow chart illustrating an overall process for determining the lowest cost meeting or gathering destination for a group of travelers according to the present invention is shown. Beginning at block 210, the computer system receives a request from an end user to start the application for determining the lowest cost meeting or gathering destination for a group of travelers. The request can be in the form of accessing a Web application using a Web browser 114, starting a software application installed on a PC 120, or opening an app on a mobile device 130, depending on which computing environment the end user chooses. Upon receiving the request, the computer system displays at block 220 a graphical user interface 140 for the end user to enter search inputs.

At block 230, the computer system receives search inputs from the end user. The inputs can include points of origin, a number of travelers from each point of origin, and a requested travel date. The points of origin can include a list of city names or a list of origin airport codes. The requested travel date can include a departure date, a return date, or both. Additional search inputs can include a list of desired destinations (city names or airport codes) and the maximum number of stops. The list of destinations is provided so that the number of destinations can be limited to accommodate available bandwidth and reduce processing time and cost. The maximum number of stops is provided so as to customize the search results to accommodate the user's preference. After receiving all the inputs from the end user, the computer system can validate that minimum search inputs have been received.

At block 240, the computer system can access the travel data in the database to determine a lowest cost for each combination of a point of origin and a destination. Although costing of flights is normally done through a "lowest available" search, other mathematical options including average of the lowest 10 seats available, weighted average of available flights, etc. can also be used so as to determine the best scenarios for customers. The information obtained in this step will be saved for further processing.

At block 250, the computer system calculates a total cost for each destination based on the determined lowest cost and the number of travelers from each point of origin. Specifically, for a particular destination the calculation is done by multiplying the lowest cost from a point of origin to the particular destination by the number of travelers coming from the point of origin and then performing a summation for all points of origin. This calculation will be repeated for each destination until all destinations have been calculated. After a total cost has been calculated for all destinations, at block 260, a list of destinations with corresponding total cost can be displayed on the user interface 140. Additional information displayed in the list can include total cost per traveler, departure flights used in the total cost calculation (flight numbers and airports visited), and return flights used in the total cost calculation if a return date is specified.

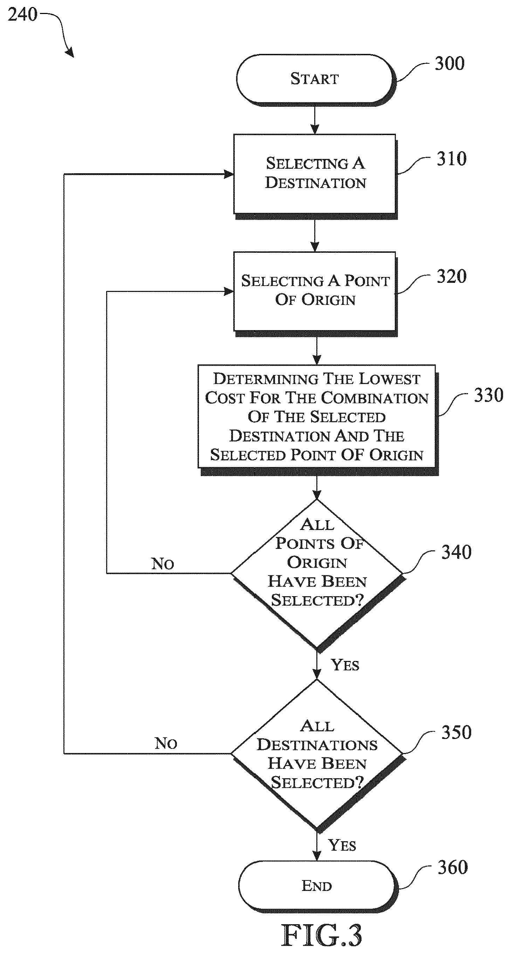

Turning now to FIG. 3, a flow chart illustrating the subroutine of step 240 in FIG. 2 is shown. The subroutine begins at block 300. At block 310, a destination is selected for processing. At block 320, a point of origin is selected for processing. The lowest cost for the selected destination and the selected point of origin is determined at block 330. At block 340, it is determined whether all points of origin have been selected and processed. If it is determined that all points of origin have been selected and processed, the subroutine continues to block 350; otherwise, the subroutine goes back to block 320 to select another point of origin for processing. At block 350, it is determined whether all destinations have been selected and processed. If it is determined that all destinations have been selected and processed, the subroutine ends at block 360; otherwise, the subroutine goes back to block 310 to select another destination for processing.

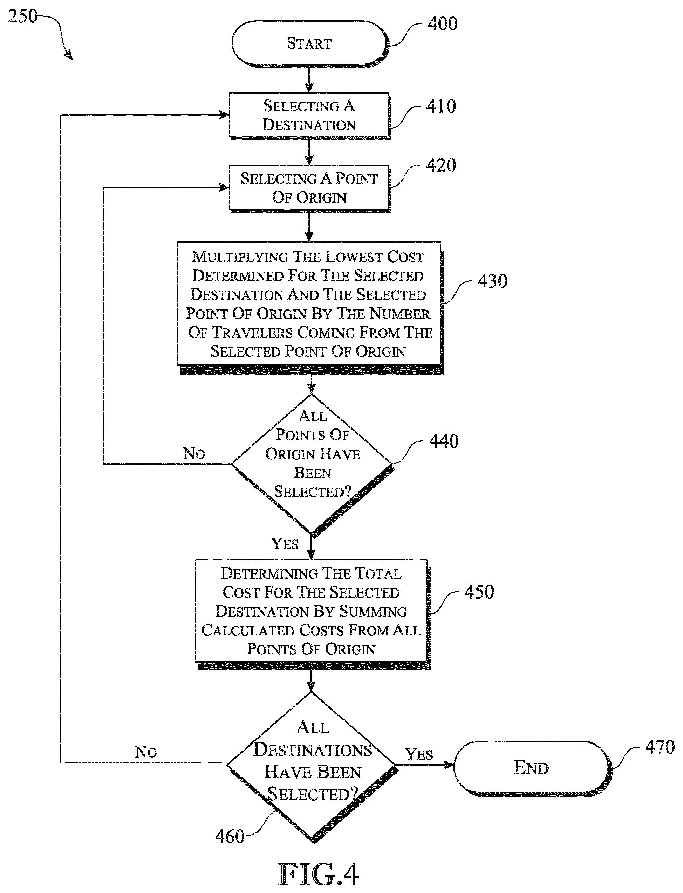

Turning now to FIG. 4, a flow chart illustrating the subroutine of step 250 in FIG. 2 is shown. The subroutine begins at block 400. At block 410, a destination is selected for processing. At block 420, a point of origin is selected for processing. At block 430, the travel cost for the selected destination and the selected point of origin is calculated by multiplying the determined lowest cost for the selected destination and the selected point of origin by the number of travelers coming from the selected point of origin. At block 440, it is determined whether all points of origin have been selected and processed. If it is determined that all points of origin have been selected and processed, the subroutine continues to block 450; otherwise, the subroutine goes back to block 420 to select another point of origin for processing. At block 450, the total cost for the selected destination is calculated by summing up calculated costs from all points of origin. At block 460, it is determined whether all destinations have been selected and processed. If it is determined that all destinations have been selected and processed, the subroutine ends at block 470; otherwise, the subroutine goes back to block 410 to select another destination for processing.

The following is an example illustrating the process described above in connection with FIGS. 2 through 4. In this example, there are seven travelers, one traveling from Boston, two traveling from Baltimore, three traveling from San Diego, and one traveling from Washington DC. The user wants to find the lowest cost destination that these people can fly together to meet. The method and system according to the present invention then takes this information (along with a travel date), queries travel data, and performs calculation as follows:

$$\text{Boston} - \text{Destination 1 x 1} = \text{Boston cost to Destination 1}$$

$$\text{Baltimore} - \text{Destination 1 x 2} = \text{Baltimore cost to Destination 1}$$

$$\text{San Diego} - \text{Destination 1 x 3} = \text{San Diego cost to Destination 1}$$

$$\text{DC} - \text{Destination 1 x 1} = \text{Washington DC cost to Destination 1}$$

-------------------------------------------------------------------------------

$$\text{Total cost to Destination 1 (D1)} = \text{Sum of above}$$

This process will be repeated for all destinations (D2, D3, D4, ...) and the result can be displayed as a list of destinations ranked by the corresponding total cost as follows:

$$\text{D1 total cost} = 6000$$

$$\text{D2 total cost} = 7500$$

$$\text{D3 total cost} = 8000$$

$$\text{D4 total cost} = 8700$$

Once the user reviews the total cost results associated to each destination, the user can carry out further actions such as storing the selected destination and associated travel arrangements and costs, purchase the set of travel tickets associated to the selected destination, forwarding the list of destinations and associated costs to a set of e-mail recipients, or the like.

In some embodiments, a user may be provided a choice to select alternative modes of travel such as driving, public transportation (e.g. bus), and/or train. A user may be provided or prompted to choose one or more modes of transport and a preferred or acceptable travel time. For example, a user may choose driving as an alternative mode of travel and select that six hours of driving is an acceptable amount of time to drive to a destination from a point of origin. The above described method and/or system may be configured to calculate whether a selected alternative mode of transport is cheaper than traveling via airline/airplane, and determing if the selected mode of transport requires time investment (e.g. driving time) within an acceptable value or threshold chosen by the user. Such a provided feature of selecting an alternative mode of transport provides flexibility and usefulness to individuals who prefer not to fly, or do not mind driving or taking other alternative modes of transport. If a selected alternative mode of transport is determined to be an acceptable mode based on a user's selected alternative transport parameters (e.g. driving time, mode of transport, number of miles), the above described system or method may automatically choose the selected alternative mode of transport. Further, such alternative modes may be calculated or determined by the system or method and suggested or provided to users via the above described GUI. Various travel information and/or parameters may be included to determine feasibility of an alternative travel method. For example, driving time, milage, terrain, weather/hazards and gas costs or travel costs. As such, a user may choose points of origin an destinations along with date of travel as described above, along with choosing an alternate travel method and parameters that can be used by the system and method to determine if the alternate travel method is better or feasible for substitution with a typical flight method as described above.

Therefore, the method and system of the present invention have the capability of determining the lowest cost meeting or gathering destination for a group of travelers from different points of origin, greatly facilitating the planning and reservation of group meetings.

In some embodiments the computing system described above may include a tangible computer-readable storage medium, also described herein as a storage machine, that holds machine-readable instructions executable by a logic machine (i.e. a processor or programmable control device) to provide, implement, perform, and/or enact the above described methods, processes and/or tasks. When such methods and processes are implemented, the state of the storage machine may be changed to hold different data. For example, the storage machine may include memory devices such as various hard disk drives or CD or DVD devices. The logic machine may execute machine-readable instructions via one or more physical devices. For example, the logic machine may be configured to execute instructions to perform tasks for a computer program. The logic machine may include one or more processors to execute the machine-readable instructions. The computing system may include a display subsystem to display a graphical user interface (GUI) or any visual element of the methods or processes described above. For example, the display subsystem, storage machine, and logic machine may be integrated such that the above method may be executed while visual elements are displayed on a display screen. The computing system may include an input subsystem that receives user input. The input subsystem may be configured to connect to and receive input from devices such as a mouse, keyboard or gaming controller. For example, a user input may indicate a request that certain task is to be executed by the computing system, such as requesting the computing system to display any of the above described information, or requesting that the user input updates or modifies existing stored information. A communication subsystem may allow the methods described above to be executed over a computer network. For example, the communication subsystem may be configured to enable the computing system to communicate with a plurality of personal computing devices. The communication subsystem may include wired and/or wireless communication devices to facilitate networked communication. The described methods or processes may be executed, provided or implemented for a user or one or more computing devices via a computer-program product such as via an application programming interface (API).

Since many modifications, variations, and changes in detail can be made to the described preferred embodiments of the invention, it is intended that all matters in the foregoing description and shown in the accompanying drawings be interpreted as illustrative and not in a limiting sense. Thus, the scope of the invention should be determined by the appended claims and their legal equivalents.

**Claims**

1. A computer-implemented method for determining a lowest cost meeting destination for a group of travelers, the method comprising the steps of:

receiving points of origin, a number of travelers from each point of origin, and a requested travel date;
determining a lowest cost for each combination of a point of origin and a destination;
calculating a total cost for each destination based on the determined lowest cost and the number of travelers from each point of origin; and
displaying on a display a list of destinations ranked by the calculated total cost.

2.  The method of claim 1, further comprising:

    receiving alternative travel mode parameters that indicate travel modes other than air travel.

3.  The method of claim 1, further comprising:

    receiving alternative travel mode parameters; and
    determining an alternative mode of travel based comparing the alternative travel mode parameters and the total cost.

4.  The method of claim 1, wherein calculating the total cost includes multiplying the number of travelers with the determined lowest cost.

5.  The method of claim 1, wherein displaying on a display a list of destinations ranked by the calculated total cost includes displaying flight information.

6.  The method of claim 1, wherein receiving points of origin, a number of travelers from each point of origin, and a requested travel date includes receiving a city name or an airport code.

7.  The method of claim 1, wherein the destination is selectable by a user.

8.  A tangible computer-readable storage medium encoded with computer executable program instructions, the executable program instructions executable by a processor to carry out a method of determining a lowest cost meeting destination for a group of travelers, the method comprising the steps of:

    receiving points of origin, a number of travelers from each point of origin, and a requested travel date;
    determining a lowest cost for each combination of a point of origin and a destination;
    calculating a total cost for each destination based on the determined lowest cost and the number of travelers from each point of origin; and
    displaying on a display a list of destinations ranked by the calculated total cost

9.  The tangible computer-readable storage medium of claim 8, wherein the executable program instructions are further executable by the processor to carry out a step of:

    receiving alternative travel mode parameters that indicate travel modes other than air travel.

10. The tangible computer-readable storage medium of claim 8, wherein the executable program instructions are further executable by the processor to carry out a step of:

    receiving alternative travel mode parameters; and
    determining an optimal alternative mode of travel based comparing the alternative travel mode parameters and the total cost.

11. The tangible computer-readable storage medium of claim 8, wherein calculating the total cost includes multiplying the number of travelers with the determined lowest cost.

12. The tangible computer-readable storage medium of claim 8, wherein displaying on a display a list of destinations ranked by the calculated total cost includes displaying flight information.

13. The tangible computer-readable storage medium of claim 8, wherein receiving points of origin, a number of travelers from each point of origin, and a requested travel date includes receiving a city name or an airport code.

14. The tangible computer-readable storage medium of claim 8, wherein the destination is selectable by a user.

15. A computer system for determining a lowest cost meeting destination for a group of travelers, the system comprising:

one or more storage machines holding instructions executable by a logic machine to carry out the steps of:

receiving points of origin and a number of travelers from each point of origin;
determining a lowest cost for each combination of a point of origin and a destination;
calculating a total cost for each destination based on the determined lowest cost and the number of travelers from each point of origin; and
displaying on a display a list of destinations ranked by the calculated total cost.

FIG. 1

STARTING THE
APPLICATION — 210

DISPLAYING ENTRY
FORM FOR SEARCH
INPUTS — 220

RECEIVING POINTS OF
ORIGIN, A NUMBER OF
TRAVELERS FROM EACH POINT
OF ORIGIN, AND A TRAVEL
DATE ENTERED BY A USER — 230

DETERMINING A LOWEST
COST FOR EACH
COMBINATION OF A POINT
OF ORIGIN AND A
DESTINATION — 240

CALCULATING A TOTAL COST FOR
EACH DESTINATION BASED ON
THE DETERMINED LOWEST
COST AND THE NUMBER OF
TRAVELERS FROM EACH POINT
OF ORIGIN — 250

DISPLAYING A LIST OF
DESTINATIONS RANKED
BY THE CALCULATED
TOTAL COST — 260

FIG. 2

240

```
        ┌─────────────┐
        │    START    │ ─── 300
        └──────┬──────┘
               │
      ┌────────▼────────┐
      │   SELECTING A   │ ─── 310
      │   DESTINATION   │
      └────────┬────────┘
               │
      ┌────────▼────────┐
      │ SELECTING A POINT │ ─── 320
      │   OF ORIGIN     │
      └────────┬────────┘
               │
  ┌────────────▼────────────┐
  │  DETERMINING THE LOWEST  │
  │ COST FOR THE COMBINATION │ ─── 330
  │   OF THE SELECTED        │
  │  DESTINATION AND THE     │
  │  SELECTED POINT OF ORIGIN│
  └────────────┬────────────┘
               │
           ◇ ALL
  NO    POINTS OF
◄────── ORIGIN         ─── 340
        HAVE BEEN
        SELECTED? ◇
               │ YES
               │
           ◇ ALL
  NO    DESTINATIONS     ─── 350
◄────── HAVE BEEN
        SELECTED? ◇
               │ YES
        ┌──────▼──────┐
        │     END     │ ─── 360
        └─────────────┘
```

FIG.3

250

```
                    ┌──────────────┐
                    │    START     │─── 400
                    └──────┬───────┘
                           │
                    ┌──────▼───────┐
                    │  SELECTING A │─── 410
                    │  DESTINATION │
                    └──────┬───────┘
                           │
                    ┌──────▼───────┐
                    │ SELECTING A  │─── 420
                    │ POINT OF     │
                    │ ORIGIN       │
                    └──────┬───────┘
```

MULTIPLYING THE LOWEST COST
DETERMINED FOR THE SELECTED
DESTINATION AND THE SELECTED
POINT OF ORIGIN BY THE NUMBER
OF TRAVELERS COMING FROM THE
SELECTED POINT OF ORIGIN — 430

ALL
POINTS OF
ORIGIN HAVE
BEEN
SELECTED? — 440

NO

YES

DETERMINING THE TOTAL
COST FOR THE SELECTED
DESTINATION BY SUMMING
CALCULATED COSTS FROM ALL
POINTS OF ORIGIN — 450

ALL
DESTINATIONS
HAVE BEEN
SELECTED?

NO

YES

END — 470

460

FIG.4

**Europäisches Patentamt**
**European Patent Office**
**Office européen des brevets**

# EUROPEAN SEARCH REPORT

Application Number

EP 16 16 8635

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/122872 A1 (STEVENS HAROLD L [US] ET AL) 8 June 2006 (2006-06-08)<br>* abstract; claim 8 *<br>* paragraph [0042] - paragraph [0046] *<br>----- | 1-15 | INV.<br>G06Q10/06<br>G06Q30/02<br>G06Q50/14 |

TECHNICAL FIELDS
SEARCHED    (IPC)

G06Q

The present search report has been drawn up for all claims

| Place of search | Date of completion of the search | Examiner |
|---|---|---|
| Munich | 9 December 2016 | Gardiner, Alexander |

EPO FORM 1503 03.82 (P04C01)

## ANNEX TO THE EUROPEAN SEARCH REPORT
## ON EUROPEAN PATENT APPLICATION NO.

EP 16 16 8635

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2016

| Patent document cited in search report | Publication date | Patent family member(s) | Publication date |
|---|---|---|---|
| US 2006122872    A1 | 08-06-2006 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62039289 B